# FASCICULE DE BREVET EUROPEEN

(11) **EP 0 538 926 B1**
(45) Date de publication et mention de la délivrance du brevet: **06.12.1995**
(21) Numéro de dépôt: 92202991.3
(22) Date de dépôt: 30.09.1992
(51) Int. Cl.: F16K 3/26, B41F 31/02

(54) **Dispositif de dosage pour des substances ayant haute viscosité**
Vorrichtung zum Dosieren hochviskoser Substanzen
Device for metering high viscosity substances

(30) Priorité: 21.10.1991 IT TO910791
(43) Date de publication de la demande: 28.04.1993
(73) Titulaire: Musso, Carlo, I-10040 La Cassa (Torino) (IT)
(72) Inventeur: Musso, Carlo, I-10040 La Cassa (Torino) (IT)
(74) Mandataire: Patrito, Pier Franco, Dr. Ing.

(56) Documents cités:
- US-A- 3 794 063
- US-A- 4 520 846
- US-A- 4 638 833
- US-A- 4 702 279

## Description

La présente invention a pour objet un dispositif pour doser des substances ayant une haute viscosité. Un exemple particulier, mais non limitatif, des substances pour le dosage desquelles le dispositif suivant l'invention est approprié, est représenté par les encres pour l'impression offset.

Pour les opérations d'impression en couleur effectuées sans faire emploi de la quadrichromie, on doit mélanger en des proportions appropriées des encres de couleurs différentes pour obtenir la gradation de couleur désirée pour l'impression. On connait des dispositifs pour effectuer mécaniquement et de façon reproductible le dosage et le mélange des encres fluides, mais le dosage et le mélange des encres de haute densité, comme celles employées dans l'impression offset, sont effectués généralement à la main, par des opérations longues et quelque peu difficiles, qui demandent une habilité particulière et, malgré cela, permettent d'atteindre seulement d'une façon approximative la gradation de couleur désirée, et n'offrent aucun moyen pour la reproduire. Cela est dû à la difficulté particulière de doser des encres ayant haute viscosité, dont le flux a la tendence à adhérer à tout moyen employé pour le contrôler, ne peut pas être interrompu facilement au moment voulu, et souille tout appareillage qu'il touche. Ces difficultés, particulièrement relatives au traitement des encres pour l'impression offset, se retrouvent toutefois aussi en d'autres domaines de la technique, notamment lorsqu'il s'agit de traiter des substances ayant une haute viscosité.

On connait du document US-A- 4 520 846 un dispositif pour doser des substances ayant haute viscosité, comprenant:
- un tube pour l'adduction de la substance à doser, fermé à son extrémité de débit et ayant près de cette extrémité une seule ouverture latérale de débit:
- un manchon monté sur le tube d'adduction, coulissant relativement et de façon substantiellement étanchesur celui-ci;
- et des moyens pour déplacer le manchon relativement le long dudit tube d'adduction entre une position de débit, dans laquelle le manchon laisse découverte l'ouverture du tube d'adduction, et une position d'interception, dans laquelle le manchon ferme l'ouverture du tube d'adduction.

Ce dispositif ne prévoit cependant pas non plus de moyens particuliers pour surmonter les difficultés d'utilisation avec une substance très visqueuse.

Un but de la présente invention est donc de proposer un dispositif qu'on peut employer pour doser des substances de haute viscosité, qui doit être capable de surmonter les difficultés ci-dessus indiquées. Un autre but de l'invention est de réaliser un tel dispositif qui doit être substantiellement simple dans sa structure, dans son emploi et dans son entretien, de sorte qu'il soit particulièrement approprié pour un usage industriel.

Ces buts sont atteints, suivant l'invention, moyennant un dispositif de dosage comprenant: un tube pour l'adduction de la substance à doser, fermé à son extrémité de débit et ayant près de cette extrémité deux ouvertures latérales de débit, l'une de grande section et l'autre, plus voisine de l'extrémité de débit, de section petite; un manchon monté sur le tube d'adduction, coulissant relativement et de façon substantiellement étanche sur celui-ci et se terminant, vers l'extrémité de débit du tube, par un bord tranchant; un moyen soufflant, monté sur le manchon et constituant une buse en correspondance desdites ouvertures de débit du tube d'adduction, ce moyen soufflant ayant dans son intérieur une chambre communiquant avec ladite buse et en communication avec une source d'air comprimé; et des moyens pour déplacer le manchon relativement le long dudit tube d'adduction entre une position de débit, dans laquelle le manchon laisse découvertes lesdites deux ouvertures de débit du tube d'adduction, et une position d'interception, dans laquelle le manchon ferme lesdites deux ouvertures du tube d'adduction, en passant par une position intermédiaire dans laquelle le manchon ferme ladite ouverture de débit de grande section mais il laisse découverte ladite ouverture de débit de section petite.

Du fait de ces caractéristiques, le dispositif autorise un débit rapide de la substance à doser à travers la plus grande ouverture de débit du tube d'adduction, lorsque le manchon se trouve dans la position de débit dans laquelle les deux ouvertures de débit sont découvertes; il autorise seulement un débit réduit à travers l'ouverture plus petite, lorsque le manchon est déplacé dans la position intermédiaire dans laquelle il laisse découverte l'ouverture de débit plus petite mais il couvre l'ouverture de débit plus grande; et il intercepte complètement le débit lorsque le manchon est déplacé dans sa position d'interception dans laquelle il couvre les deux ouvertures de débit. Pendant le passage de l'une à l'autre de ces positions, le bord tranchant du manchon tranche le flux de la substance visqueuse en offrant à son contact seulement une petite surface, et donc pour cette raison réduisant au minimum la possibilité d'adhésion de la substance visqueuse, tandis qu'en même temps le souffle d'air comprimé, dirigé par la buse contre le bord tranchant du manchon et vers les ouvertures à travers lesquelles la substance visqueuse est débitée, détache de ces parties toute quantité de substance visqueuse adhérente, gardant ainsi nettes ces mêmes parties. De ce fait, en contrôlant de façon appropriée les moyens de déplacement du manchon, il est possible de réaliser un débit rapide jusqu'à une première approximation de la quantité désirée pour le dosage, suivi par un débit réduit, le cas échéant aussi intermittent, jusqu'à atteindre l'approximation définitive de la quantité désirée pour le dosage, laquelle peut donc être atteinte avec une tolérance très réduite. En effectuant de façon continue un contrôle de la quantité débitée, par exemple moyennant le pesage du récipient dans lequel la substance est débitée, et cela de préférence sous la commande d'un ordinateur dûment disposé pour être contrôlé par le signal de pesage et pour commander les moyens de déplacement du manchon, on peut obtenir un fonctionnement entièrement automatique et reproductible d'un appareillage comprenant le dispositif de dosage suivant l'invention.

De préférence, une deuxième buse soufflante est disposée devant l'extrémité de débit du tube d'adduction pour détacher, de cette extrémité aussi, toute quantité de substance adhérente, ainsi complétant l'action des moyens soufflants solidaires du manchon.

De préférence, les moyens de déplacement du manchon sont montés en une position fixe, tandis que le tube d'adduction avec le manchon correspondant peut être déplacé par rapport auxdits moyens de déplacement, pour être engagé ou désengagé par rapport à ces moyens de déplacement. De cette façon il est possible de disposer plusieurs tubes d'adduction, alimentés par des différentes substances à mélanger, chacun desquels étant porté en position de débit pour être commandé par les moyens de déplacement du manchon, pendant une série d'opérations de dosage tendant à réaliser un mélange désiré de substances dosées.

De préférence le dispositif comprend en outre des moyens de maintien disposés pour immobiliser le manchon dans sa position d'interception lorsqu'il n'est pas engagé par les moyens de déplacement. Cela offre une sécurité contre des pertes possibles de substance, dues à des déplacements accidentels des manchons.

Ces caractéristiques et d'autres, d'autres buts et les avantages du dispositif suivant l'invention vont ressortir plus clairement de la suivante description d'un mode de réalisation de dispositif de dosage, indiqué à titre d'exemple non limitatif et représenté schématiquement dans les dessins annexés, dans lesquels:
Fig. 1 montre en vue en plan un dispositif suivant l'invention, sectionné en partie suivant l'axe du tube d'adduction;
Fig. 2 en montre une section verticale;

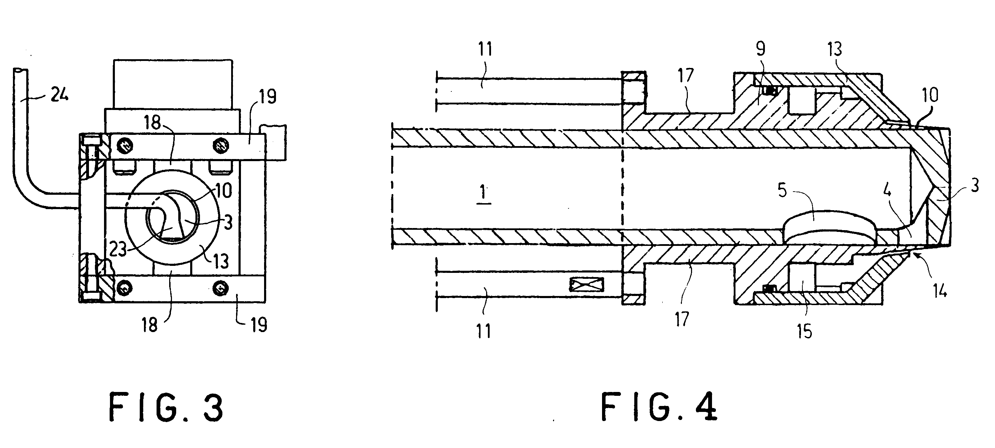

Fig. 3 en est une vue axiale suivant là flèche III de la figure 2;
Fig. 4 montre, à une échelle plus grande et en une section correspondante à celle de la figure 2, une partie du tube d'adduction et le manchon correspondant, dans la position d'interception.

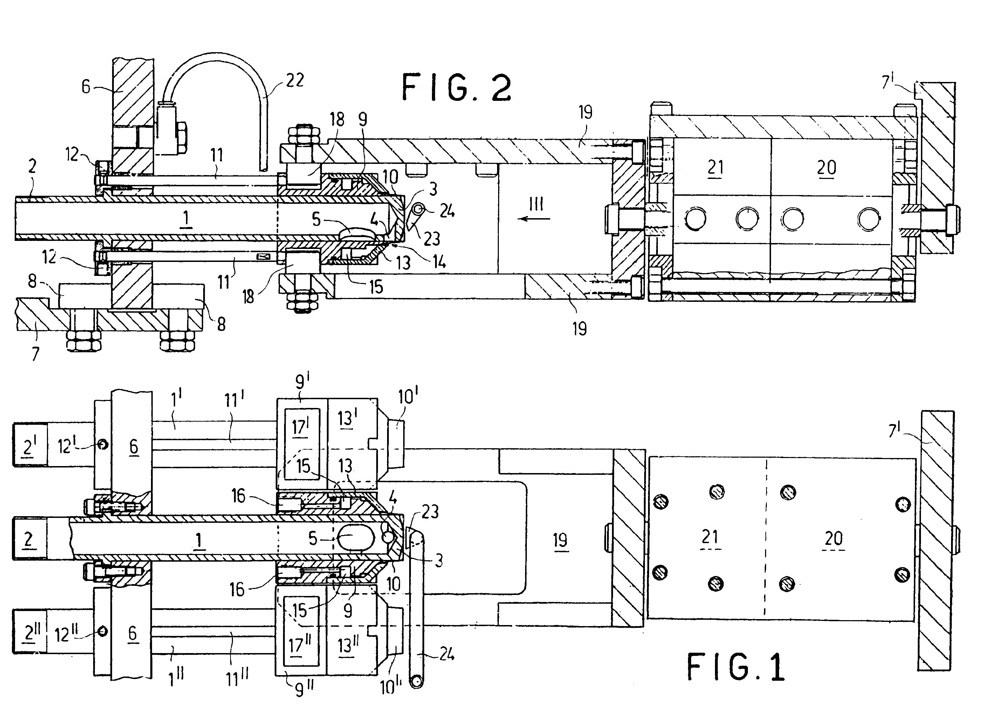

Le numéro 1 désigne un tube d'adduction, lequel reçoit par son extrémité d'entrée 2 l'alimentation d'une substance à doser ayant une haute viscosité, et dont l'extrémité de débit 3 opposée est fermée. Au voisinage de l'extrémité fermée 3, le tube d'adduction 1 est pourvu d'une ouverture latérale 4 de petite section, laquelle dans ce cas est disposée sur le côté inférieur, et qui est appropriée pour un débit réduit de la substance. A une distance quelque peu plus grande de l'extrémité 3, le tube d'adduction 1 est pourvu en outre d'une ouverture 5 de plus grande section, appropriée pour un débit rapide de la substance. Le tube d'adduction 1 est supporté par une structure mobile 6, laquelle peut être déplacée par rapport à une structure fixe 7 sur laquelle elle est guidée par des rouleaux 8. La structure mobile 6 peut supporter nombre de tubes d'adduction comme 1, lesquels peuvent être portés, l'un ou l'autre, dans la position de débit montrée pour le tube d'adduction 1, dans le but de débiter des substances différentes à mélanger. Dans la figure 1 on a représenté en vue externe, à côté du tube d'adduction 1 qui se trouve en position de débit, deux autres tubes d'adduction 1′, 1˝, dont les parties complémentaires décrites dans la suite sont aussi désignées par les apex correspondants.

Sur le tube d'adduction 1 est monté, coulissant en direction axiale, un manchon 9 se terminant par un bord tranchant 10 dirigé du côté de l'extrémité 3 du tube d'adduction 1. La surface externe du tube 1 et la surface interne du manchon 9 sont usinées de sorte à résulter suffisamment étanches par rapport à la substance à doser, laquelle, dû à sa haute viscosité, ne demande pas l'emploi de garnitures. Le manchon 9 est connecté à des tiges de guidage 11 coulissant en des alésages de la structure mobile 6 et qui peuvent être pourvues de moyens de maintien 12, fonctionnant par détente élastique, pour arrêter le manchon 9 dans la position illustrée, dans laquelle son bord tranchant 10 couvre et ferme les deux ouvertures 4 et 5 du tube d'adduction 1. La position montrée est donc la position d'interception.

Sur le manchon 9 est monté un fourreau 13 qui, avec le bord tranchant 10 du manchon 9, définit une buse 14 en correspondance des ouvertures 4 et 5 du tube d'adduction 1. Le fourreau 13 définit, également avec le manchon 9, une chambre 15 communiquant avec des raccords 16 alimentés en air comprimé, par exemple par des tubulures 22. Comme on le comprend, l'air comprimé alimenté par les raccords 16 à la chambre 15 est soufflé par la buse 14 le long de la surface extérieure du bord tranchant 10 en correspondance des ouvertures 4 et 5.

Le manchon 9 comporte des fraisages 17, inférieur et supérieur, dans lesquels peuvent engager des rouleaux 18 supportés par un équipage mobile 19 qui peut être déplacé moyennant deux cylindres pneumatiques coaxiaux 20 et 21 montés sur une partie 7′ de la structure fixe 7 du dispositif. Ces cylindres permettent donc de déplacer le manchon 9 du tube d'adduction 1, qui est couplé avec les rouleaux 18, entre sa position d'interception représentée, une position de débit dans laquelle le bord tranchant 10 du manchon 9, déplacé vers la gauche suivant le dessin, découvre les deux ouvertures 4 et 5 du tube d'adduction 1, et une position intermédiaire dans laquelle le bord tranchant 10 découvre l'ouverture plus petite 4 mais il couvre l'ouverture plus grande 5.

Devant l'extrémité 3 du tube d'adduction 1 qui se trouve dans la position opérative est installée une buse 23 alimentée en air comprimé par une tubulure 24. Afin de coopérer avec cette buse, la face d'extrémité 3 du tube d'adduction 1 est, de préférence, un peu conique ou inclinée, comme représentée.

Le dispositif ainsi décrit fonctionne comme suit.

D'abord la structure mobile 6 est déplacée de sorte à porter dans la position de débit le tube d'adduction 1 qui est alimenté par la substance à débiter par cette opération. Du fait de ce déplacement, les fraisages 17 du manchon 9 du tube d'adduction 1 considéré engagent les rouleaux 18, ainsi autorisant le déplacement du manchon 9 par l'action des cylindres 20 et 21, tandis que les manchons 9′, 9˝ des autres tubes d'adduction 1′, 1˝, qui ne sont pas en position de débit, sont retenus dans leurs positions d'interception par les moyens de maintien respectifs 12′, 12˝, Dans cette condition de départ, le manchon 9 se trouve lui-aussi dans sa position d'interception, et il y est retenu par les tiges 11 ainsi que par les moyens de maintien 12. Afin de commencer le débit, les deux cylindres pneumatiques 20 et 21 sont activés, et ils déplacent le manchon 9 dans la position de débit, ainsi découvrant les deux ouvertures 4 et 5. Ainsi commence une phase de débit rapide de la substance alimentée au tube d'adduction 1. Cette phase est prolongée jusqu'à ce que la quantité de substance à débiter a été presqu'atteinte. Cette condition peut être détectée, par exemple, en pesant à l'aide d'une balance un récipient accueillant le débit, et en commandant les cylindres pneumatiques 20 et 21 moyennant un ordinateur subordonné à ladite balance. De cette façon, lorque la quantité désirée a été presqu'atteinte, on peut activer le cylindre 20 pour déplacer le manchon 9 de la position de débit à ladite position intermédiaire, dans laquelle il couvre l'ouverture 5 tout en laissant découverte l'ouverture plus petite 4. Donc le débit se poursuit, mais à un rythme bien plus réduit, et cela permet d'interrompre le débit lorsque la quantité exacte à doser a été débitée. A ce moment, on active le cylindre 21 pour déplacer à nouveau le manchon 9 dans sa position d'interception, interrompant ainsi le débit.

Le dosage exact peut être rendu plus facile en faisant contrôler par l'ordinateur aussi la pression sous laquelle la substance à doser est alimentée au tube d'adduction 1, et plus précisément en réduisant cette pression vers la fin de chaque phase de débit. De plus, il est possible d'effectuer le passage du manchon 9 de la position intermédiaire à la position d'interception par intermittence, donnant ainsi lieu à un dégouttement de la substance débitée pendant la période finale du dosage.

Lorsque le manchon 9 est déplacé de la position de débit à la position intermédiaire, ou bien de la position intermédiaire à la position d'interception, de l'air comprimé est alimenté à la buse 14, et celle-ci souffle un jet d'air comprimé le long du bord tranchant 10 vers l'ouverture de débit 5 ou 4 qu'on est en train de fermer. Ce jet d'air comprimé emporte immédiatement toute petite quantité de substance qui tendrait à adhérer au bord tranchant 10 qui est en train de trancher le flux de la substance visqueuse, même si la quantité de substance adhérisée est déjà réduite grâce à la petite surface offerte par le bord tranchant. Lorsque chaque phase d'interception se termine, on alimente en air comprimé également la buse 23, laquelle souffle cet air contre la surface d'extrémité 3 du tube d'adduction 1 et contre le bord tranchant 10 qui est en train ou vient juste de fermer l'ouverture 4, de sorte à compléter l'action de nettoyage des parties opératives du dispositif.

Ladite alimentation d'air comprimé aux buses 14 et 23 peut être soit limitée aux périodes dans lesquelles elle doit effectuer l'action décrite ci-dessus, soit être continue.

Ainsi complété le dosage d'une première substance, si l'on désire effectuer le dosage d'une autre substance, la structure mobile 6 est déplacée de sorte à porter un autre tube d'adduction 1 dans la position de débit, et tout le cycle de fonctionnement décrit est répété pour ce tube. De cette façon, on peut effectuer le dosage et le mélange de substances composées en conditions d'automatisme complet, avec une haute précision et avec la possibilité de reproduire exactement le processus lorsqu'on doit à nouveau doser et mélanger une substance composée identique.

Bien entendu, même si on a décrit un mode de réalisation spécifique du dispositif de dosage suivant l'invention, cette dernière n'est pas limitée à cet exemple, et certaines dispositions de construction peuvent être modifiées, aussi dans le but de coordonner le dispositif avec d'autres appareillages coopérants. Par exemple, les moyens de déplacement du manchon sur le tube d'adduction peuvent être mécaniques, électromécaniques, hydrauliques, pneumatiques ou mixtes. Les moyens d'actionnement et de guidage représentés peuvent être remplacés par d'autres moyens ayant des fonctions similaires.

D'autres modifications peuvent être apportées à condition de tomber dans le domaine de protection conférée par les revendications.

## Revendications

1. Dispositif pour doser des substances ayant une haute viscosité, caractérisé en ce qu'il comprend: un tube (1) pour l'adduction de la substance à doser, fermé à son extrémité de débit (3) et ayant près de cette extrémité deux ouvertures latérales de débit, l'une (5) de grande section et l'autre (4), plus voisine de l'extrémité de débit (3), de section petite; un manchon (9) monté sur le tube d'adduction (1), coulissant relativement et de façon substantiellement étanche sur celui-ci et se terminant, vers l'extrémité de débit (3) du tube (1), par un bord tranchant (10); un moyen soufflant (14-16), monté sur le manchon (9) et constituant une buse (14) en correspondance desdites ouvertures de débit (4,5) du tube d'adduction (1), ce moyen soufflant ayant dans son intérieur une chambre (15) communiquant avec ladite buse (14) et en communication (16) avec une source d'air comprimé; et des moyens (17-21) pour déplacer le manchon (9) relativement le long dudit tube d'adduction (1) entre une position de débit, dans laquelle le manchon (9) laisse découvertes lesdites deux ouvertures de débit (4,5) du tube d'adduction, et une position d'interception, dans laquelle le manchon (9) ferme lesdites deux ouvertures (4,5) du tube d'adduction, en passant par une position intermédiaire dans laquelle le manchon (9) ferme ladite ouverture de débit (5) de grande section mais il laisse découverte ladite ouverture de débit (4) de section petite.

2. Dispositif de dosage suivant la revendication 1, caractérisé en ce qu'un deuxième moyen soufflant (23-24) est disposé devant l'extrémité de débit (3) du tube d'adduction (1).

3. Dispositif de dosage suivant la revendication 1, caractérisé en ce que lesdits moyens (17-21) de déplacement du manchon (9) sont montés en une position fixe, tandis que le tube d'adduction (1) avec le manchon correspondant (9) peut être déplacé par rapport auxdits moyens de déplacement (17-21), pour être engagé ou désengagé par rapport à ces moyens de déplacement.

4. Dispositif de dosage suivant la revendication 1, caractérisé en ce qu'il comprend plusieurs tubes d'adduction (1,1′,1˝,...), alimentés par des différentes substances à mélanger, chacun desquels est porté en position de débit pour être commandé par les moyens (17-21) de déplacement du manchon (9), pendant une série d'opérations de dosage tendant à réaliser un mélange désiré de substances dosées.

5. Dispositif de dosage suivant la revendication 1, caractérisé en ce qu'il comprend des moyens de maintien (12) disposés pour immobiliser ledit manchon (9) dans sa position d'interception lorsqu'il n'est pas engagé par les moyens de déplacement (17-21).

6. Dispositif de dosage suivant la revendication 1 ou 2, caractérisé en ce que lesdits moyens soufflants (14-16,23-24) sont alimentés seulement pendant les périodes dans lesquelles ledit manchon (9) est déplacé pour intercepter une ouverture de débit (4,5).

7. Dispositif de dosage suivant la revendication 4, caractérisé en ce que lesdits moyens de déplacement (17-21) sont constitués par des cylindres pneumatiques (20,21) connectés à un équipage mobile (19) pourvu de rouleaux (18) disposés pour engager des évidements correspondants (17) du manchon (9) dudit tube d'adduction (1) qui se trouve dans la position de débit.

8. Dispositif de dosage suivant la revendication 2, caractérisé en ce que la face d'extrémité (3) fermée du tube d'adduction (1) est quelque peu conique ou inclinée.

## Patentansprüche

1. Dosiervorrichtung für schwerflüssige Stoffe, dadurch gekennzeichnet, dass sie aus einem Rohr (1) zur Zuleitung des zu dosierenden Stoffes, das an seinem Auslassende (3 geschlossen ist und bei diesem Ende zwei seitliche Auslassöffnungen aufweist, wovon die eine Öffnung (5) einen grossen Querschnitt und die andere, näher am Auslassende (3) liegende Öffnung (4) einen kleinen Querschnitt hat, aus einer am Zuleitungsrohr (1) angeordneten Muffe (9), die relativ zum Zuleitungsrohr und im wesenlichen abdichtend an demselben verschiebbar ist und in Richtung des Auslassendes (3) des Zuleitungsrohrs (1) mit einem scharfkantigen Rand (10) endet, aus Blasmitteln (14-16), die an der Muffe (9) angeordnet sind und im Bereich der Auslassöffnungen (4,5) des Zuleitungsrohrs (1) eine Düse (14) bilden, wobei im Inneren dieser Blasmittel eine Kammer (15) vorgesehen ist, die mit der Düse (14) in Verbindung steht und (bei 16) mit einer Druckluftquelle verbunden ist, und aus Mitteln (17-21) besteht, um die Muffe (9) entlang dem Zuleitungsrohr (1) von einer Abgabelage, in der die Muffe (9) beide Auslassöffnungen (4,5) des Zuleitungsrohrs freigibt, über eine Zwischenlage, in der die Muffe (9) die Auslassöffnung (5) mit grossem Querschnitt verschliesst, jedoch die Auslassöffnung (4) mit kleinem Querschnitt freigibt, bis zu einer Sperrlage zu verschieben, in der die Muffe (9) beide Auslassöffnungen (4,5) verschliesst.

2. Dosiervorrichtung nach Anspruch 1, dadurch gekennzeichnet, dass gegenüber dem Auslassende (3) des Zuleitungsrohrs (1) zweite Blasmittel (23-24) angeordnet sind.

3. Dosiervorrichtung nach Anspruch 1, dadurch gekennzeichnet, dass die Verstellmittel (17-21) der Muffe (9) in einer festen Lage angeordnet sind, während das Zuleitungsrohr (1) mit der entsprechenden Muffe (9) relativ zu den Verstellmitteln (17-21) verschiebbar ist, um mit diesen Verstellmitteln in Eingriff gebracht bzw. von denselben gelöst zu werden.

4. Dosiervorrichtung nach Anspruch 1, dadurch gekennzeichnet, dass sie mehrere Zuleitungsrohre (1,1′,1˝, ...) umfasst, die mit verschiedenen zu mischenden Stoffen beschickt und je in eine Abgabelage gebracht werden, wobei sie durch die Verstellmittel (17-21) der Muffe (9) in nacheinanderfolgenden Dosiervorgängen gesteuert werden, um aus den dosierten Stoffen ein gewünschtes Gemisch herzustellen.

5. Dosiervorrichtung nach Anspruch 1, dadurch gekennzeichnet, dass sie Haltemittel (12) umfasst, die die Muffe (9) in Sperrlage halten, wenn sie mit den Verstellmitteln (17-21) nich in Eingriff ist.

6. Dosiervorrichtung nach Ansprüch 1 oder 2, dadurch gekennzeichnet, dass die Blasmittel (14-16,23-24) nur in den Zeitabschnitten beschickt werden, in denen die Muffe (9) verschoben wird, um eine Auslassöffnung (4,5) zu versperren.

7. Dosiervorrichtung nach Anspruch 4, dadurch gekennzeichnet, dass die Verstellmittel (17-21) aus Druckluftzylindern (20,21) bestehen, die mit einem beweglichen System (19) verbunden sind, dessen Rollen (18) so angeordnet sind, dass sie in entsprechende Aussparungen (17) der Muffe (3) des Zuleitungsrohrs (1) eingreifen.

8. Dosiervorrichtung nach Anspruch 2, dadurch gekennzeichnet, dass das geschlossene Endstück (3) des Zuleitungsrohrs (1) etwas kegelförmig oder geneigt ist.

## Claims

1. A device for dosing substances having a high viscosity, characterized in that it comprises: a tube (1) for adducing the substance to be dosed, closed at its delivery end (3) and provided near said end with two side delivery openings, the one (5) having a large section and the other (4), more near to the delivery end (3), having a little section; a sleeve (9) mounted on said adduction tube (1), relatively slidable thereon with substantial sealing and ending, towards the delivery end (3) of tube (1), with a sharp border (10); a blower means (14-16), mounted on said sleeve (9) and forming a nozzle (14) in register with said delivery openings (4,5) of the adduction tube (1), this blower means having inside thereof a chamber (15), communicating with said nozzle (14) and connected (at 16) to a source of compressed air; and means (17-21) for relatively displacing said sleeve (9) along said adduction tube (1) between a delivery position, wherein the sleeve (9) leaves free both said delivery openings (4,5) of the adduction tube, and a shut off position, wherein the sleeve (9) closes both said delivery openings (4,5) of the adduction tube, passing through an intermediate position in which the sleeve (9) covers said delivery opening (5) having a large section but leaves free said delivery opening (4) having a little section.

2. A dosing device according to Claim 1, characterized in that a second blower means (23-24) is provided, facing the delivery end (3) of the adduction tube (1).

3. A dosing device according to Claim 1, characterized in that said means (17-21) for displacing the sleeve (9) are installed in a fixed position, whereas the adduction tube (1) with the corresponding sleeve (9) may be displaced with resnect to said displacement means (17-21), in order to be engaged or disengaged with respect to said displacement means.

4. A dosing device according to Claim 1, characterized in that it comprises a number of adduction tubes (1,1′,1˝,...) supplied with different substances to be mixed, each tube being displaceable in its delivery position in order to be controlled by the means (17-21) for displacing the sleeve (9), in a series of dosage operations intended to prepare a desired mixture of dosed substances.

5. A dosing device according to Claim 1, characterized in that it comprises retainment means (12) intended to retain said sleeve (9) in its position of interception when it is not engaged with the displacement means (17-21).

6. A dosing device according to Claim 1 or 2, characterized in that said blower means (14-16,23-24) are supplied only during the periods in which said sleeve (9) is displaced in order to cover a delivery opening (4,5).

7. A dosing device according to Claim 4, characterized in that said displacement means (17-21) are embodied by pneumatic cylinders (20,21) connected to a movable element (19) provided with rollers (18) intended for engaging corresponding recesses (17) of the sleeve (9) pertaining to the adduction tube (1) which is in its delivery position.

8. A dosing device according to Claim 2, characterized in that the closed end face (3) of the adduction tube (1) is somewhat conical or slanting.
